# EUROPÄISCHE PATENTSCHRIFT

(11) **EP 3 545 351 B1**
(45) Veröffentlichungstag und Bekanntmachung des Hinweises auf die Patenterteilung: **14.12.2022**
(21) Anmeldenummer: 17751389.2
(22) Anmeldetag: 10.08.2017
(51) Int. Cl.: G02B 27/01

(54) **KOPF-OBEN-ANZEIGEVORRICHTUNG FÜR EIN KRAFTFAHRZEUG MIT EINER JUSTIERVORRICHTUNG, FAHRERASSISTENZSYSTEM, KRAFTFAHRZEUG UND VERFAHREN ZUM JUSTIEREN DER KOPF-OBEN-ANZEIGEVORRICHTUNG**
HEAD-UP DISPLAY DEVICE FOR A MOTOR VEHICLE HAVING AN ADJUSTMENT DEVICE, DRIVER ASSISTANCE SYSTEM, MOTOR VEHICLE, AND METHOD FOR ADJUSTING THE HEAD-UP DISPLAY DEVICE
DISPOSITIF D'AFFICHAGE TÊTE HAUTE POUR VÉHICULE AUTOMOBILE COMPRENANT UN DISPOSITIF D'AJUSTAGE, SYSTÈME D'AIDE À LA CONDUITE, VÉHICULE AUTOMOBILE ET PROCÉDÉ D'AJUSTAGE DE CE DISPOSITIF D'AFFICHAGE TÊTE HAUTE

(30) Priorität: 22.11.2016 DE 102016122420
(43) Veröffentlichungstag der Anmeldung: 02.10.2019
(73) Patentinhaber: Valeo Schalter und Sensoren GmbH, 74321 Bietigheim-Bissingen (DE)
(72) Erfinder: SIMONIS, Karl, 74321 Bietigheim-Bissingen (DE); KUNTZE, Daniel, 74321 Bietigheim-Bissingen (DE); POSLOWSKY, Georg, 74321 Bietigheim-Bissingen (DE)
(74) Vertreter: Pothmann, Karsten
(86) Internationale Anmeldenummer: PCT/EP2017/070326
(87) Internationale Veröffentlichungsnummer: WO 2018/095599

(56) Entgegenhaltungen:
- EP-A1- 3 232 250
- DE-A1- 10 144 491
- DE-A1-102013 213 923
- DE-A1-102014 211 485

## Beschreibung

Die vorliegende Erfindung betrifft eine Kopf-oben-Anzeigevorrichtung für ein Kraftfahrzeug mit einem Gehäuse, welches eine in dem Gehäuse angeordnete Projektionseinrichtung zum Erzeugen eines virtuellen Bildes auf eine außerhalb des Gehäuses liegende und von dem Beobachter betrachtbare Projektionsfläche aufweist. Die Kopf-oben-Anzeigevorrichtung weist weiterhin zumindest einen um eine Drehachse schwenkbar gelagerten Spiegel auf, der in einer Umlenkposition zum Umlenken eines von einer Lichtquelle der Projektionseinrichtung ausgegebenen Lichts ausgebildet ist. Des Weiteren weist die Kopf-oben-Anzeigevorrichtung eine Justiervorrichtung auf, die mit dem Spiegel gekoppelt ist und die eine motorische Antriebseinheit zum Justieren der Umlenkposition des Spiegels durch Schwenken um die Drehachse aufweist. Darüber hinaus betrifft die vorliegende Erfindung ein Fahrerassistenzsystem mit einer solchen Kopf-oben-Anzeigevorrichtung. Ferner betrifft die vorliegende Erfindung ein Kraftfahrzeug mit einem solchen Fahrerassistenzsystem mit einer solchen Kopf-oben-Anzeigevorrichtung. Schließlich betrifft die folgende Erfindung ein Verfahren zum Justieren eines Spiegels einer Kopf-oben-Anzeigevorrichtung eines Kraftfahrzeugs.

Aus dem Stand der Technik, wie beispielsweise in der US 2016/0161741 A1, sind bereits Kopf-oben-Anzeigevorrichtungen für Kraftfahrzeuge bekannt, mit denen dem Fahrer bzw. den Insassen des Kraftfahrzeuges eine Anzeige bereitgestellt werden kann. Das Interesse richtet sich vorliegend insbesondere auf Kopf-oben -Anzeigevorrichtungen, welche auch als Head-Up-Displays (HUD) bezeichnet werden. Eine derartige Kopf-oben-Anzeigevorrichtung umfasst üblicherweise ein Gehäuse, in welchem eine Projektionseinrichtung angeordnet ist. Ferner umfasst die Kopf-oben-Anzeigevorrichtung eine Optikeinrichtung, die beispielsweise eine oder mehrere Spiegel umfassen kann. Mit der Optikeinrichtung kann das von der Projektionseinrichtung abgestrahlte Licht auf eine Projektionsfläche projiziert werden. Die Projektionsfläche ist derart angeordnet, dass sie von einem Beobachter, insbesondere einem Fahrer des Kraftfahrzeugs, betrachtbar ist. Die Projektionsfläche kann eine semitransparente Spiegelfläche aufweisen. Diese semitransparente Spielfläche kann beispielsweise durch einen Bereich der Windschutzscheibe des Kraftfahrzeugs bereitgestellt werden. Die Optikeinrichtung kann einen zumindest um eine Drehachse schwenkbar gelagerten Spiegel aufweisen. Der drehbar gelagerte Spiegel dient insbesondere zum Umlenken eines von der Projektionseinrichtung ausgegebenen Lichts. Die auf das Anzeigeelement, insbesondere der Windschutzscheibe, projizierte Information, welche von diesem reflektiert wird, wird mit einer durch das Anzeigeelement hindurchscheinenden Information aus einer hinter dem Anzeigeelement gelegenen Umgebung überlagert, wodurch ein virtuelles Bild bzw. eine virtuelle Anzeige bereitgestellt werden kann. Um dem Fahrer je nach Sitzposition, bzw. je nach Größe des Fahrers, eine gute Sicht auf das virtuelle Bild zu ermöglichen, kann eine Augenbox, die auch "Eyebox" genannt wird, im Fahrzeug nachgeführt werden. Die Eyebox ist derjenige Bereich oder Sichtbereich, in dem der Augenpunkt des Benutzers liegt, d.h. derjenige Bereich, in dem der Benutzer die angezeigte Information sehen kann. Das Umlenken des ausgegebenen Lichts durch die Projektionseinrichtung dient zum Nachführen der Eyebox und wird mittels einer Justiervorrichtung am Spiegel realisiert

Die Position der Kopf-oben-Anzeigevorrichtung ist üblicherweise vor dem Beobachter, insbesondere vor dem Fahrer des Kraftfahrzeuges, in einer Fahrgastzelle des Kraftfahrzeuges angeordnet. Es kann ein Bauraum im Bereich des Armaturenbretts, insbesondere im Bereich einer Kombihutze, bereitgestellt werden, in dem die Kopf-oben-Anzeigevorrichtung montiert werden kann und mittels einer Abdeckung, die vorzugsweise transparent ist, vor Schmutzpartikeln geschützt werden.

Ein Verstellbereich der Eyebox ist üblicherweise sehr gering, da eine große Änderung des Nach-unten-Schau-Winkels, auch "Look-Down-Winkel" genannt, auch eine große Verschiebung des virtuellen Bilds nach sich zieht. Der Look-Down-Winkel ist der Winkel zwischen Horizont zu einem markierten Bild beziehungsweise der Winkel der Straßenoberfläche, der aus einer Augenposition des Beobachters resultiert. Bei einer Veränderung des Look-Down-Winkels wird also eine Lage des virtuellen Bilds geändert, sodass eine dargestellte Information bei der virtuellen Anzeige verändert werden kann, so dass beispielsweise ein Navigationspfeil aus Sicht des Beobachters nicht mehr auf der Straße liegt. Des Weiteren darf das virtuelle Bild nicht zu weit in einen in Höhenrichtung mittleren Sichtbereich des Fahrers gelangen, da sonst das virtuelle Bild eventuelle Hindernisse in der Umgebung des Kraftfahrzeugs überblenden könnte. Ein zu weit unten im Sichtfeld des Beobachters gelegenes Bild könnte eine Überschneidung mit einer Spiegelung eines Kraftfahrzeugbauteils, beispielsweise einer Spiegelung des Armaturenbretts, ergeben. Üblicherweise reicht daher eine Änderung von +/-2°aus, um die Lage des virtuellen Bilds an die Eyebox des Fahrers anzupassen. Der Verstellbereich muss ebenfalls möglichst "fließend" durchfahren werden, sodass ein Betrachter das Verstellen, insbesondere Justieren, nicht wahrnimmt. Des Weiteren wird dadurch eine hohe Variabilität verschiedener Lagen des virtuellen Bilds realisiert. Aus dem Stand der Technik sind hierzu Stellmotoren mit einem stark untersetzten Getriebe bekannt, mittels welcher das Justieren, insbesondere das Schwenken des Umlenkspiegels durchgeführt wird. Diese Stellmotoren mit dem stark untersetzten Getriebe sind oftmals sehr teuer.

Die JP 2015059968 offenbart eine Kopf-oben-Anzeigevorrichtung mit einem drehbaren Spiegel, welcher über eine Justiervorrichtung mit einem Schrittmotor justiert werden kann. Dieser Motor greift nicht an der Drehachse an, sondern an einem Schubpunkt. Mittels einer Schraube wird eine Schubstange betätigt, die den Spiegel verstellt. Weitere Kopf-oben-Anzeigevorrichtungen mit drehbarem Spiegel, welcher über eine Justiervorrichtung justiert werden kann, sind aus DE 10 2014 211485 A1 und EP 3 232 250 A1 bekannt.

Bei diesen Kopf-oben-Anzeigevorrichtungen gibt es Ausführungen, bei welchen das virtuelle Bild an die Innenseite der Windschutzscheibe projiziert wird, so dass es vom Beobachter, insbesondere dem Fahrer, an der Innenseite betrachtet werden kann. Des Weiteren sind dazu unterschiedliche Ausführungen von Kopf-oben-Anzeigevorrichtungen bekannt, bei welchen das virtuelle Bild nicht auf die Windschutzscheibe projiziert wird, sondern mit einem zusätzlichen Spiegel, dem so genannten Kombinierspiegel, der Kopf-oben-Kopf-oben-Anzeigevorrichtung zum Beobachter hin projiziert wird und somit bei insbesondere richtiger Einstellung des Kombinierspiegels in dessen Gesicht projiziert wird. Nachfolgend ist das Interesse auf Kopf-oben-Anzeigevorrichtungen gerichtet, die keinen derartigen zusätzlichen Kombinierspiegel aufweisen, sondern Windschutzscheiben Anzeigevorrichtungen sind.

Es ist Aufgabe der vorliegenden Erfindung, eine Kopf-oben-Anzeigevorrichtung, ein Kraftfahrzeug und ein Verfahren zu schaffen, bei welcher bzw. bei welchem das Justieren eines Spiegels einfach und dennoch genau erfolgen kann.

Diese Aufgabe wird erfindungsgemäß durch eine Kopf-oben-Anzeigevorrichtung, durch ein Fahrerassistenzsystem, durch ein Kraftfahrzeug, sowie ein Verfahren mit den Merkmalen gemäß den jeweiligen unabhängigen Ansprüchen gelöst.

Eine erfindungsgemäße Kopf-oben-Anzeigevorrichtung für ein Kraftfahrzeug, die auch als Head-up-Display bezeichnet wird, umfasst ein Gehäuse. Ferner ist in dem Gehäuse eine Projektionseinrichtung zum Erzeugen eines virtuellen Bilds angeordnet. Ferner wird das virtuelle Bild auf eine außerhalb des Gehäuses liegende und von einem Beobachter betrachtbare Projektionsfläche projiziert. Es ist vorgesehen, dass die Projektionseinrichtung einen um eine Drehachse schwenkbar gelagerten Spiegel aufweist. Ferner ist der Spiegel in einer Umlenkposition zum Umlenken eines von der Lichtquelle der Projektionseinrichtung ausgegebenen Lichts ausgebildet. Weiterhin umfasst die Kopf-oben-Anzeigevorrichtung eine Justiervorrichtung, auf die mit dem Spiegel gekoppelt ist, und die eine motorische Antriebseinheit zum Justieren der Umlenkposition des Spiegels durch Schwenken um die Drehachse aufweist.

Ein wesentlicher Gedanke der Erfindung ist darin zu sehen, dass die Justiervorrichtung ein Verstellelement aufweist, welches wiederum eine Spiralnut aufweist. Des Weiteren weist die Justiervorrichtung ein Koppelelement auf, welches mit der Spiralnut gekoppelt ist. Zum Schwenken des Spiegels ist das Koppelelement relativ zur Spiralnut in der Spiralnut bewegbar. Dabei wird die Relativbewegung durch die motorische Antriebseinheit, welche insbesondere ein Schrittmotor sein kann, erzeugt. Mittels dieser Anordnung ist eine besonders präzise Führung der Bewegung des Koppelelements bewirkbar und dadurch ein besonders feinjustiertes Verschwenken des Spiegels um die Drehachse zur Verstellung der Umlenkposition realisierbar. Somit kann auf einfache und dennoch hochpräzise Weise ein Schwenken des Spiegels um die Drehachse ermöglicht werden. Gerade die Spiralnut ermöglicht hier, dass bei einer Relativbewegung des Koppelelements dazu auch besonders kleine Verstellwege des Spiegels vollzogen werden können und somit auch kleinste Verkippungen des Spiegels eingestellt werden können.

Durch die erfindungsgemäße Kopf-oben-Anzeigevorrichtung wird eine erweiterte Realität mit gleichbleibender Höhenlage des virtuellen Bildes beim Anpassen eines Sichtfelds an benutzerspezifische Bedürfnisse ermöglicht. Somit wird die Darstellung der erweiterten Realität für beispielsweise sehr große oder sehr kleine Benutzer verbessert.

Um die Augenposition zu ermitteln, kann die Kopf-oben-Anzeigevorrichtung eine Sensoreinrichtung zum Erfassen der Augenposition aufweisen sowie eine Steuereinrichtung, die dazu eingerichtet ist, in Abhängigkeit von einem Signal der Sensoreinrichtung die Justiervorrichtung, insbesondere die motorische Antriebseinheit, zu steuern und somit ein Schwenken des Spiegels durchzuführen. Mit anderen Worten kann die Steuereinrichtung dazu eingerichtet sein, in Abhängigkeit von dem Signal der Sensoreinrichtung eine Drehlage des Spiegels zu verändern. Die Sensoreinrichtung kann ein Bauteil oder eine Gerätekomponente der Kopf-oben-Anzeigevorrichtung sein, die einen entsprechenden Sensor aufweisen kann. Ein solcher Sensor kann beispielsweise als Kamera ausgebildet sein. Ebenfalls möglich ist, dass eine manuelle Einstellung durch einen Nutzer durchgeführt wird. So kann beispielsweise eine Bedieneinrichtung verbaut sein, mittels welcher die Steuereinrichtung bei einem Betätigen durch den Nutzer angesteuert wird und ein Verschwenken des Spiegels nach einer Eingabe durch den Nutzer durchgeführt wird.

In einer vorteilhaften Ausgestaltungsform kann das Verstellelement mit der motorischen Antriebseinheit verbunden sein und das Verstellelement durch die motorische Antriebseinheit um eine Rotationsachse rotatorisch bewegbar sein. Dies ist sehr vorteilhaft, da somit die Bewegungsabläufe sehr gleichmäßig und ruckfrei erfolgen können und die Zielposition des Spiegels exakt und schnell erreicht wird. Insbesondere kann dabei vorgesehen sein, dass das Verstellelement eine feststehende Drehachse aufweist. Dies bedeutet, dass die motorische Antriebseinheit und das Verstellelement miteinander gekoppelt sind und sich das Verstellelement relativ dazu dreht aber sich als Ganzes nicht relativ zu der Antriebseinheit verschiebt. Die Komplexität der Bewegungsführung ist dadurch reduziert.

In einer weiteren vorteilhaften Ausgestaltungsform kann das Verstellelement als eine Scheibe ausgebildet sein. Dadurch wird nur ein geringer Bauraum benötigt. Durch die Scheibenform ist insbesondere die Höhe des Verstellelements sehr klein, jedoch eine dazu relativ große Oberfläche an einer Oberseite geschaffen, in welcher die Spiralnut ausgebildet ist. Dadurch lässt sich die Spiralnut sehr individuell gestalten, da entsprechend Flächenplatz vorhanden ist.

Es hat sich weiterhin als vorteilhaft erwiesen, wenn das Koppelelement ortsfest an dem Spiegel angeordnet ist. Somit kann besonders einfach und genau bei einer Rotation des Verstellelements das Koppelelement bewegt werden, da keine Toleranzen zwischen dem Spiegel und dem Koppelelement auftreten. Es kann somit auch ein einfacher Verbau des Koppelelements, und damit eine einfache Herstellung des Koppelelements mit dem Spiegel, realisiert werden. Es kann dabei insbesondere vorgesehen sein, dass das Koppelelement außerhalb einer Reflexionsfläche des Spiegels mit dem Spiegel gekoppelt ist. Dadurch kann die Reflexionsfläche des Spiegels im Ganzen ausgenutzt werden, wodurch ein vorteilhafteres virtuelles Bild an die Windschutzscheibe projiziert werden kann. Die Kopf-oben-Anzeigevorrichtung kann dadurch auch materialsparender und kostengünstiger produziert werden, da gerade der Spiegel aufwendig in der Produktion ist. Daher ist vorteilhaft die gesamte zur Verfügung stehende Spiegelfläche als Reflexionsfläche nutzbar.

Insbesondere kann weiter vorgesehen sein, dass das Koppelelement nicht auf der Drehachse des Spiegels liegend ausgebildet ist. Insbesondere kann die Drehachse beabstandet zu einem ersten Rand und beabstandet zu einem zweiten gegenüberliegenden Rand des Spiegels verlaufend ausgebildet sein. Die Drehachse kann sich weiterhin zwischen die beiden Ränder verbindende, weiteren Ränder erstrecken, wobei das Koppelelement zwischen dem Spiegel und einer Verbindungslinie zwischen den Rändern zwischen Drehachse und einem Rand angeordnet sein kann, insbesondere an einem Rand ausgebildet ist. Mittels dieser Anordnung kann ein Hebelarm erzeugt werden, wodurch der Spiegel mit einem geringen Kraftaufwand bei gleichzeitiger hoher Genauigkeit justiert werden kann.

Es ist ebenfalls möglich, dass das Koppelelement nicht am Spiegel sondern an der Antriebseinheit angeordnet ist und dort exzentrisch zu einer Rotationsachse, um welche es rotierbar ist, angeordnet ist, und das Verstellelement drehfest mit dem Spiegel verbunden ist. Mittels einer exzentrischen Bewegung des Koppelelements kann somit auch eine Verschwenkung des Spiegels realisiert werden.

Erfindungsgemäß weist der Spiegel einen Rahmen mit einem Trägersteg auf, wobei an einem unteren Rand des Trägerstegs das Koppelelement angeordnet ist. Somit kann das Koppelelement noch weiter von der Drehachse entfernt angeordnet werden und dadurch der Hebelarm noch weiter vergrößert werden. Somit lässt sich der Spiegel mit noch geringerem Kraftaufwand und bei noch höherer Genauigkeit justieren. Des Weiteren ist eine Spiegelfläche des Spiegels noch unbeeinträchtigter vor Abschattung durch das Koppelelement.

Es hat sich weiterhin als vorteilhaft erwiesen, wenn an einer ersten Seite des Trägerstegs eine Druckfeder und/oder an einer zweiten Seite des Trägerstegs eine Zugfeder angeordnet ist. Die Druckfeder und die Zugfeder sind in sich längenveränderlich. Durch spezielle Materialien und "Drahtdicken" der Druckfeder beziehungsweise der Zugfeder an sich, kann eine sehr exakte und bedarfsgenaue Federkraft bereitgestellt werden. Diese Federkraft kann dann dämpfend und haltend am Trägersteg angeordnet werden. Durch die Druckfeder beziehungsweise die Zugfeder kann auf einfache und günstige Weise eine Dämpfung von Rüttelbewegungen, welche beispielsweise bei einer Bewegung des Kraftfahrzeugs entstehen, sowie eine Dämpfung einer Kraftübertragung auf den Spiegel realisiert werden. Somit können Vibrationen der Kopf-oben-Anzeigevorrichtung vom Spiegel entkoppelt werden. Dadurch kann ein verbessertes virtuelles Bild für den Nutzer der Kopf-oben-Anzeigevorrichtung bereitgestellt werden.

Gemäß einer weiteren vorteilhaften Ausgestaltungsform kann die Spiralnut zumindest einmal vollständig umlaufend, insbesondere zumindest zweimal vollständig umlaufend, insbesondere genau zweimal umlaufend, ausgebildet sein. Insbesondere ist die Spiralnut um eine Rotationsachse, um welche das Verstellelement durch die Antriebseinheit drehbar ist, umlaufend. Mittels dieser Ausgestaltungsform kann somit besonders genau und feinjustiert der Spiegel eingestellt werden.

Insbesondere kann vorgesehen sein, dass die motorische Antriebseinheit, welche mit der Steuereinrichtung gekoppelt sein kann, die Position des Koppelelements innerhalb der Spiralnut erfasst und auf einem Speichermedium abspeichert. Somit können für unterschiedliche Nutzer der Kopf-oben-Anzeigevorrichtungen unterschiedliche Umlenkpositionen des Spiegels bereitgestellt werden. Beispielsweise kann der Nutzer über einen individuellen Kraftfahrzeugschlüssel erkannt werden und, entsprechend den abgespeicherten Daten zur Umlenkposition, der Spiegel entsprechend justiert werden. Insbesondere bei der bevorzugten Ausführungsvariante, dass genau zweimal die Spiralnut umlaufend ausgebildet ist, kann eine besonders genaue Justierung des Spiegels durchgeführt werden. Durch die verschiedenen Umlaufvarianten der Spiralnut kann die Kopf-oben-Anzeigevorrichtung mit unterschiedlichen motorischen Antriebseinheiten betrieben werden (jedoch immer nur eine motorische Antriebseinheit in der Justiervorrichtung), wodurch eine erhöhte Modularität zum Justieren der Kopf-oben-Anzeigevorrichtung gegeben ist. Somit kann für die Kopf-oben-Anzeigevorrichtung insgesamt eine motorische Antriebseinheit aus einer Mehrzahl von unterschiedlichen Antriebseinheiten bereitgestellt werden, wodurch die Kopf-oben-Anzeigevorrichtung insgesamt individueller gestaltet werden kann.

Gemäß einer weiteren vorteilhaften Ausgestaltungsform kann die Spiralnut an einem ersten Ende einen Anfangsanschlag und an einem zweiten Ende einen Endanschlag aufweisen. Mittels dieser Ausgestaltungsform kann beispielsweise die Steuereinrichtung die Kopf-oben-Anzeigevorrichtung kalibrieren. Insbesondere kann vor jedem Fahrtantritt eine Kalibrierung der Kopf-oben-Anzeigevorrichtung stattfinden. Dazu kann beispielsweise die Justiervorrichtung zunächst derart angesteuert werden, dass das Koppelement zum Anfangsanschlag "gefahren" wird. Im Anschluss daran kann die Justiervorrichtung derart angesteuert werden, dass das Koppelement zum Endanschlag "gefahren" wird. Dadurch ist der Verstellweg bekannt und die Justiervorrichtung kann im Wesentlichen jede beliebe Position innerhalb des Bereichs des Anfangsanschlag und des Endanschlags "anfahren". Es kann beispielsweise eine individuelle Spiegelposition und die dazu individuelle Position des Koppelelements in einem Speichermedium abgespeichert werden und nach der Kalibrierung "angefahren" werden. Somit kann gewährleistet werden, dass das virtuelle Bild der Kopf-oben-Anzeigevorrichtung bei jedem Fahrtantritt richtig positioniert ist und beispielsweise eine individuelle Einstellung des Spiegels kann durch die vorherige Kalibrierung noch besser realisiert werden.

Gemäß einer weiteren vorteilhaften Ausgestaltungsform kann der Spiegel an einem Trägerelement der Kopf-oben-Anzeigevorrichtung gelagert sein. Damit kann die Kopf-oben-Anzeigevorrichtung separat montiert werden und beispielsweise in einem fertig montierten Zustand in das Kraftfahrzeug eingebaut werden. Der Montageaufwand und die Montagezeit des Kraftfahrzeugs kann somit verbessert werden. Außerdem kann auf einfache Weise, beispielsweise bei einer defekten Kopf-oben-Anzeigevorrichtung, die Kopf-oben-Anzeigevorrichtung insgesamt ausgetauscht werden was ebenfalls zu einer Reduzierung der Montagezeit führen kann.

Es hat sich weiterhin als vorteilhaft erwiesen, wenn das Trägerelement zumindest eine, insbesondere V-förmige, Kerbe zur Aufnahme eines Lagerzapfens des Spiegels aufweist. Insbesondere an einer Seitenwand des Trägerelements kann die V-förmige Kerbe ausgebildet sein. Durch die Seitenwand ist eine Aufnahmemulde des Trägerelements begrenzt, in welche der Spiegel sich erstreckt. Insbesondere ist die Kerbe an einem oberen Rand der Seitenwand ausgebildet. Der Spiegel kann dadurch einfach und dennoch lagegenau positioniert werden und leichtgängig geschwenkt werden.

Gemäß einer weiteren vorteilhaften Ausgestaltungsform kann der Spiegel zumindest einen, insbesondere pilzförmigen, Lagerzapfen zum drehbaren Lagern an dem Trägerelement aufweisen. Ein sicherer und satter Sitz des Spiegels an dem Trägerelement ist dadurch erreicht, der dennoch ein verliersicheres und genaues Schwenken ermöglicht. Insbesondere kann der Lagerzapfen an einem Rahmen des Spiegels einstückig ausgebildet sein. Insbesondere kann weiterhin vorgesehen sein, dass der Lagerzapfen an der Drehachse des Spiegels ausgebildet ist. Es kann beispielsweise vorgesehen sein, dass auf einer ersten Seite des Spiegels ein Zapfen als Lagerzapfen ausgebildet ist, der in einer Ausnehmung des Trägerelements angeordnet werden kann. Diese Ausnehmung kann beispielsweise lediglich lochförmig sein, insbesondere sacklochförmig sein, und der Lagerzapfen kann in diese Ausnehmung eingesteckt werden.

Auf einer zweiten Seite, welche am Trägerelement gegenüber der ersten Seite gelegen ist, kann der Spiegel den, insbesondere, pilzförmigen Lagerzapfen aufweisen, welcher insbesondere in der V-förmigen Kerbe des Trägerelements angeordnet ist. Es ist auch möglich, dass der Spiegel auf beiden Seiten pilzförmige Lagerzapfen aufweist und das Trägerelement auf gegenüberliegenden Seitenwänden jeweils eine V-förmige Kerbe aufweist. Somit können mehrere Lagermöglichkeiten für den Spiegel an der Kopf-oben-Anzeigevorrichtung bereitgestellt werden, wodurch die Lagerung der Kopf-oben-Anzeigevorrichtung verbessert wird.

Es kann beispielsweise vorgesehen sein, dass der Lagerzapfen, insbesondere der pilzförmige Lagerzapfen, mittels eines Blattfederelements in der zumindest einen, insbesondere V-förmigen, Kerbe lagerbar ist. Mittels dieses Blattfederelements, welches insbesondere vorgespannt ist, kann somit eine Federkraft auf den Lagerzapfen ausgeübt werden und somit kann der Spiegel innerhalb des Trägerelements positioniert werden.

Gemäß einer weiteren bevorzugten Ausführungsform ist die Justiervorrichtung derart ausgebildet, dass der Spiegel in seiner Umlenkposition um kleiner ± 1,8°um eine Grundstellung veränderbar ist. Es hat sich besonders vorteilhaft gezeigt, dass mittels einer Umlenkposition um kleiner ± 1,8°um eine Grun dstellung der bevorzugte Stellbereich einer Eyebox von ± 2°realisiert werde n kann. Bei einer Veränderung der Umlenkposition wird also eine Lage des virtuellen Bilds auf der Projektionsfläche, insbesondere einer Windschutzscheibe, geändert, so dass eine dargestellte Information bei einer virtuellen Anzeige verändert wird, so dass beispielsweise bei der Darstellung eines Navigationspfeils dieser aus der Sicht des Beobachters nicht mehr auf der Straße liegt. Des Weiteren darf das virtuelle Bild nicht zu weit in einen mittleren Sichtbereich des Fahrers gelangen, da sonst das virtuelle Bild eventuelle Hindernisse an der Umgebung des Fahrzeugs überblenden könnte. Ein zu weit unten im Sichtfeld des Beobachters gelegenes Bild könnte eine Überschneidung mit einer Spiegelung des Fahrzeugbauteils, beispielsweise einer Spiegelung des Armaturenbretts, ergeben.

Ein erfindungsgemäßes Fahrerassistenzsystem für ein Kraftfahrzeug umfasst eine erfindungsgemäße Kopf-oben-Anzeigevorrichtung.

Ein erfindungsgemäßes Kraftfahrzeug umfasst ein erfindungsgemäßes Fahrerassistenzsystem. Das Kraftfahrzeug ist insbesondere als Personenkraftwagen ausgebildet.

Bei einem erfindungsgemäßen Verfahren wird ein Justieren eines Spiegels einer Kopf-oben-Anzeigevorrichtung eines Kraftfahrzeugs durchgeführt. Hierbei weist die Kopf-oben-Anzeigevorrichtung ein Gehäuse auf, welches eine in dem Gehäuse angeordnete Projektionseinrichtung zum Erzeugen eines virtuellen Bilds auf eine außerhalb des Gehäuses liegende und von dem Beobachter betrachtbare Projektionsfläche aufweist. Die Kopf-oben-Anzeigevorrichtung weist ein mit zumindest einem um eine Drehachse schwenkbar gelagerten Spiegel auf, der in einer Umlenkposition zum Umlenken eines von der Lichtquelle der Projektionseinrichtung ausgegebenen Lichts ausgebildet ist. Eine Justiervorrichtung der Kopf-oben-Anzeigevorrichtung wird mit dem Spiegel gekoppelt, wobei zum Justieren der Umlenkposition des Spiegels das Schwenken um die Drehachse durch eine motorische Antriebseinheit der Justiervorrichtung durchgeführt wird.

Ein wesentlicher Gedanke des Verfahrens ist darin zu sehen, dass ein Koppelelement der Justiervorrichtung, welches an einem unteren Rand eines an einem Spiegelrahmen befindlichen Trägerstegs angeordnet ist, mit einer in einem Verstellelement der Justiervorrichtung ausgebildeten Spiralnut gekoppelt wird. Weiterhin wird im gekoppelten Zustand des Koppelelements mit der Spiralnut durch die motorische Antriebseinheit eine Relativbewegung, insbesondere eine Linearbewegung, zwischen dem Koppelelement und der Spiralnut erzeugt und abhängig von dieser Relativbewegung der Spiegel verschwenkt, insbesondere dadurch justiert. Insbesondere greift das Koppelelement direkt in die Spiralnut ein.

Eine Steuereinrichtung der Kopf-oben-Anzeigevorrichtung kann ein entsprechendes Steuersignal empfangen, das ein erwünschtes Umlenken und damit einen gewünschten Höhenversatz eines Sichtbereichs um die Augenposition des Beobachters beschreibt und in Abhängigkeit vom Steuersignal wird ein Schwenken des Spiegels zum Justieren um die Drehachse veranlasst. Das Steuersignal kann beispielsweise von einer Bedieneinrichtung des Kraftfahrzeugs oder von der Sensoreinrichtung erzeugt werden. Mittels der Sensoreinrichtung kann ein automatisches Anpassen der Eyebox realisiert werden. Die mit Bezug auf die erfindungsgemäße Kopf-oben-Anzeigevorrichtung vorgestellten bevorzugten Ausführungsformen und deren Vorteile gelten entsprechend für das erfindungsgemäße Fahrerassistenzsystem, das erfindungsgemäße Kraftfahrzeug sowie das erfindungsgemäße Verfahren.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar.

Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind.

Die Erfindung wird nun anhand von bevorzugten Ausführungsbeispielen sowie unter Bezugnahme auf die beigefügten Zeichnungen erläutert.

Dabei zeigen:
- Fig. 1: eine ausschnittsweise Darstellung eines Kraftfahrzeugs, welches eine Kopf-oben-Anzeigevorrichtung gemäß einer Ausführungsform der vorliegenden Erfindung aufweist;
- Fig. 2: eine schematische und ausschnittsweise Darstellung der Kopf-oben-Anzeigevorrichtung mit einem schwenkbaren Spiegel;
- Fig. 3: eine schematische Draufsicht auf ein Verstellelement gemäß einer Ausführungsform der vorliegenden Erfindung;
- Fig. 4: eine weitere schematische und ausschnittsweise Darstellung der Kopf-oben-Anzeigevorrichtung mit einem schwenkbaren Spiegel; und
- Fig. 5: eine weitere schematische Darstellung der Kopf-oben-Anzeigevorrichtung mit einem schwenkbaren Spiegel.

In den Figuren werden gleiche und funktionsgleiche Elemente mit den gleichen Bezugszeichen versehen.

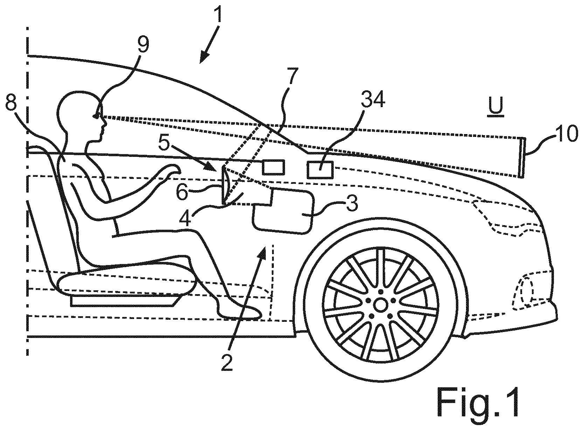

Fig. 1 zeigt eine ausschnittsweise Darstellung eines Kraftfahrzeugs 1 gemäß einer Ausführungsform der vorliegenden Erfindung. Das Kraftfahrzeug 1 ist in dem vorliegenden Ausführungsbeispiel als Personenkraftwagen ausgebildet. Das Kraftfahrzeug 1 umfasst allgemein eine Kopf-oben-Anzeigevorrichtung 2 zur Projektion eines virtuellen Bilds 10 auf eine vorrichtungsexterne Projektionsfläche. Die Kopf-oben-Anzeigevorrichtung 2 ist in dem vorliegenden Ausführungsbeispiel als Kopf-Oben-Kopf-oben-Anzeigevorrichtung 2 bzw. Head-Up-Display ausgebildet. Die Kopf-oben-Anzeigevorrichtung 2 kann insbesondere an einer Kombihutze des Kraftfahrzeuges 1 angeordnet sein, welche wiederum an einem Armaturenbrett angeordnet sein kann.

Die Kopf-oben-Anzeigevorrichtung 2 umfasst eine Projektionseinrichtung 3. Mittels der Projektionseinrichtung 3 kann insbesondere Licht 4 abgestrahlt werden. Insbesondere kann mit der Projektionseinrichtung 3 ein Bild bereitgestellt werden. Die Projektionseinrichtung 3 kann beispielsweise einen entsprechenden Bildschirm aufweisen, mit dem Licht 4 von zunächst einer Lichtquelle der Projektionseinrichtung 3 zur Erzeugung des virtuellen Bilds 10 verarbeitet wird und dann ein Bild bereitgestellt werden kann. Darüber hinaus umfasst die Kopf-oben-Anzeigevorrichtung 2 eine Optikeinrichtung 5. Die Optikeinrichtung 5 umfasst vorliegend einen Spiegel 6. Das von der Projektionseinrichtung 3 abgestrahlte Licht 4 in Form des virtuellen Bilds 10 trifft zunächst auf den Spiegel 6 und anschließend auf ein Anzeigeelement bzw. auf eine vorrichtungsexterne Projektionsfläche, welches bzw. welche insbesondere eine Windschutzscheibe 7 des Kraftfahrzeugs 1 darstellt. Die Projektionseinrichtung 3 und die Optikeinrichtung 5 sind vorliegend innerhalb eines Armaturenbretts des Kraftfahrzeugs 1 angeordnet.

Die Windschutzscheibe 7 weist eine Spiegelfläche auf und ist semi-transparent ausgebildet. Das Licht 4, das von der Projektionseinrichtung 3 abgestrahlt wird, wird mittels der Optikeinrichtung 5 auf die Windschutzscheibe 7 projiziert. Ferner wird das Licht 4, das auf die Windschutzscheibe 7 projiziert wird, zu Augen 9 eines Beobachters, insbesondere eines Fahrers 8, des Kraftfahrzeugs 1 reflektiert. Somit überlagert sich diese Anzeige mit dem Licht, das von einem Umgebungsbereich U des Kraftfahrzeugs 1 zu den Augen 9 des Betrachters gelangt, mit dem Licht 4, das auf die Windschutzscheibe 7 projiziert wird. Für den Betrachter, der insbesondere der Fahrer 8 des Kraftfahrzeugs 1 ist, ergibt sich somit eine virtuelle Anzeige bzw. ein virtuelles Bild 10.

Das virtuelle Bild 10 kann insbesondere so auf die Windschutzscheibe 7 projiziert werden, dass es in einem unteren Sichtbereich des Fahrers 8 dargestellt wird. Vorzugsweise befindet sich die Position in einem unteren Sichtbereich des Fahrers 8 dort, wo keine Spiegelung von anderen Kraftfahrzeugbauteilen, beispielsweise eine Spiegelung des Armaturenbretts, für den Fahrer 8 auftreten. Vorzugsweise befindet sich das virtuelle Bild 10 weiterhin in einem Sichtbereich, so dass alle Hindernisse, bzw. eine Straße, von dem Fahrer 8 noch erkennbar sind.

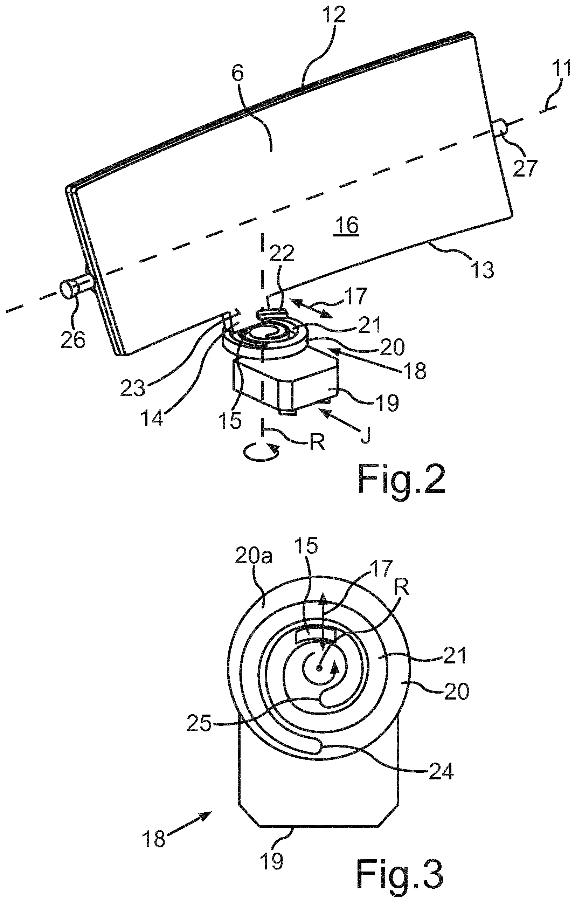

Fig. 2 zeigt eine schematische Perspektivansicht einer Ausführungsform einer erfindungsgemäßen Kopf-oben-Anzeigevorrichtung 2. Der Spiegel 6 ist dabei insbesondere um eine Drehachse 11 schwenkbar lagerbar. Die Drehachse 11 verläuft dabei beabstandet zu einem oberen Rand 12 und einem unteren Rand 13, insbesondere parallel zu dem oberen Rand 12 und/oder dem unteren Rand 13. An dem unteren Rand 13 ist vorteilhafterweise ein Trägersteg 14 angeordnet, welcher wiederum an dessen unteren Rand ein Koppelelement 15 angeordnet hat. Somit liegen insbesondere das Trägerelement 14 und das Koppelelement 15 außerhalb einer Spiegelfläche bzw. Reflexionsfläche 16 des Spiegels 6. Insbesondere über Bewegung 17 des Koppelelements 15 kann der Spiegel 6 um die Drehachse 11 geschwenkt werden. Der Spiegel 6 umfasst einen die Ränder 12, 13 aufweisenden Rahmen, der die Reflexionsfläche 16 einfasst.

Fig. 2 zeigt weiterhin ein Verstellelement 18, welches insbesondere eine Scheibe 20 ist. Die Scheibe 20 ist wiederum über eine Rotationsachse R mit der motorischen Antriebseinheit 19 drehbar verbunden. Die Scheibe 20 ist weiterhin derart mit der motorischen Antriebseinheit 19 verbunden, dass im antreibenden Zustand der motorischen Antriebseinheit 19 die Scheibe 20 über die Rotationsachse R ebenfalls in Rotation versetzt wird. Auf einer Oberseite 20a (Fig. 3) der Scheibe 20 ist eine Spiralnut 21 ausgebildet. Insbesondere greift das Koppelelement 15 zumindest bereichsweise in die Spiralnut 21 ein. Somit kann bei einer Rotation der motorischen Antriebseinheit 19 die Rotation über die Rotationsachse R auf die Scheibe 20 übertragen werden. Die Rotationsachse R ist ortsfest. Die Spiralnut 21 ist um die Rotationsachse R umlaufend ausgebildet. Die Scheibe 20, insbesondere die Spiralnut 21, bewegt sich und das Koppelelement 15 wird in die Bewegung 17 gebracht, was wiederum zu einem Verschwenken des Spiegels 6 um die Drehachse 11 führt. Insbesondere bilden das Koppelelement 15, das Verstellelement 18, die motorische Antriebseinheit 19, die Scheibe 20 und die Spiralnut 21 die Justiervorrichtung J.

Ein zwischen der Drehachse 11 und dem unteren Rand 13 entstandener Hebelarm führt von einer linearen Kraft, die von dem Koppelelement 15 übertragen wird, zu einer Drehbewegung um die Drehachse 11 des Spiegels 6.

Am Trägersteg 14 kann weiterhin beispielsweise ein Federelement 22 angeordnet sein, welches beispielsweise als Druckfeder beziehungsweise als Zugfeder ausgebildet sein kann. In dieser Ausführungsform kann beispielsweise auf einer ersten Seite 23 des Trägerstegs 14 eine Druckfeder angeordnet sein. Alternativ kann auf einer zweiten Seite, welche insbesondere der ersten Seite 23 gegenüberliegt, des Trägerelements 14 eine Zugfeder angeordnet sein. Die Druckfeder beziehungsweise die Zugfeder können dämpfend wirken, so dass Vibrationen, welche beispielsweise bei einer Bewegung des Kraftfahrzeugs auftreten können und von der Anzeigeeinrichtung 2 an den Spiegel 6 übertragen werden können, gedämpft werden. Somit kann ein verbessertes virtuelles Bild 10 für den Fahrer 8 bereitgestellt werden.

Fig. 3 zeigt eine schematische Draufsicht auf das Verstellelement 18. Die Scheibe 20 ist um die Rotationsachse R relativ zur motorischen Antriebseinheit 19 drehbar, wobei die Drehung der Rotationsachse R durch die motorische Antriebseinheit 19 bewirkt ist. Auf der Scheibe 20 ist die Spiralnut 21 angeordnet. Die Spiralnut 21 verläuft dabei insbesondere genau zweimal umlaufend um die Rotationsachse R. Es sind auch weitere Ausführungsformen der Spiralnut 21 denkbar, beispielsweise könnte die Spiralnut 21 einmal umlaufend oder auch mehr als zweifach umlaufend ausgebildet sein. Je mehr Umläufe die Spiralnut 21 aufweist, desto genauer kann der Spiegel 6 justiert werden.

Die Spiralnut 21 weist einen Endanschlag 24 und einen Anfangsanschlag 25 auf. Das Koppelelement 15 ist dabei zumindest bereichsweise in der Spiralnut 21 angeordnet. Über eine Rotation der Scheibe 20 um die Rotationsachse R kann insbesondere die Bewegung 17 des Koppelelements 15 realisiert werden.

Der Endanschlag 24 und der Anfangsanschlag 25 können insbesondere zur Kalibrierung des Verstellelements 18 genutzt werden. Des Weiteren kann mittels des Endanschlags 24 und des Anfangsanschlags 25 ein "Herausrutschen" des Koppelements 15 aus der Spiralnut 21 verhindert werden. Insbesondere kann vor jedem Fahrtantritt eine Kalibrierung der Kopf-oben-Anzeigevorrichtung 2 stattfinden. Dazu kann beispielsweise die Justiervorrichtung J zunächst derart angesteuert werden, dass das Koppelement 15 zum Anfangsanschlag 25 "gefahren" wird. Im Anschluss daran kann die Justiervorrichtung J derart angesteuert werden, dass das Koppelement 15 zum Endanschlag 24 "gefahren" wird. Dadurch ist der Verstellweg bekannt und die Justiervorrichtung J kann im Wesentlichen jede beliebe Position innerhalb des Bereichs des Anfangsanschlag 25 und des Endanschlags 24 "anfahren". Es kann beispielsweise eine individuelle Spiegelposition und die dazu individuelle Position des Koppelelements 15 in einem Speichermedium abgespeichert werden und nach der Kalibrierung "angefahren" werden. Insbesondere durch die zweifach umlaufende Spiralnut 21 kann somit eine sehr feine dosierte Bewegung 17 des Koppelelements 15 durchgeführt werden, wobei der Stellbereich der motorischen Antriebseinheit 19 entsprechend gering gewählt werden kann, was wiederum zu einer sehr feinen Justierung des Spiegels 6 um die Drehachse 11 führt. Insbesondere kann vorgesehen sein, dass die Bewegung 17 zu einer Verstellung des Spiegels 6 um einem Wert von ± 1,8°um die Grundstellung des Spiegels 6 führt.

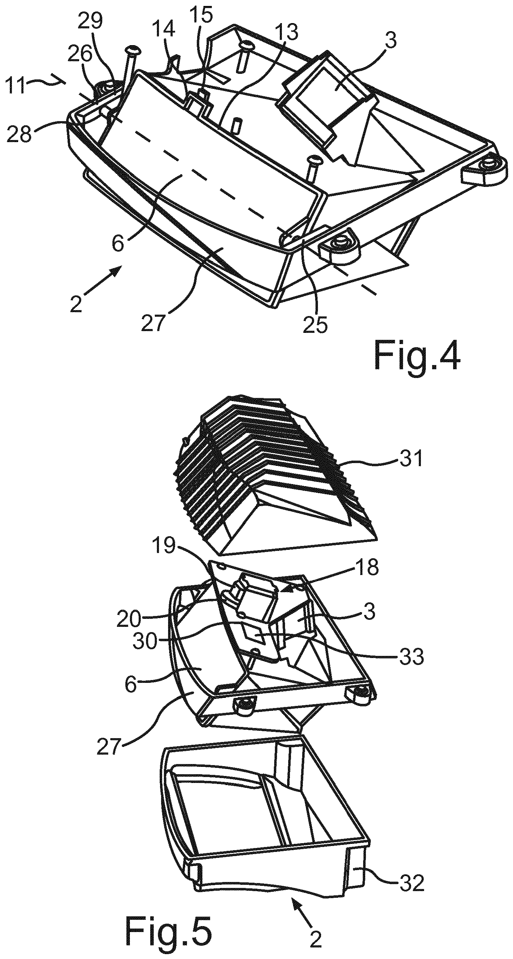

Fig. 4 zeigt eine weitere schematische und ausschnittsweise Darstellung der Kopf-oben-Anzeigevorrichtung 2. Der Spiegel 6 ist dabei an einem Trägerelement 27 angeordnet beziehungsweise gelagert. Insbesondere über Lagerzapfen 26a, 26b kann der Spiegel 6 an dem Trägerelement 27 angeordnet werden. Dabei kann beispielsweise der Lagerzapfen 26a stiftförmig ausgebildet sein, während der Lagerzapfen 26b pilzförmig ausgebildet sein kann. Insbesondere bei einer pilzförmigen Ausgestaltung des Lagerzapfens 26b ist eine Verrutschsicherheit erreicht. Es kann am Trägerelement 27 eine Kerbe 28, insbesondere eine V-förmige Kerbe 28, vorgesehen sein. In diese Kerbe 28 kann somit der pilzförmige Lagerzapfen 26b positioniert werden. Der stiftförmige Lagerzapfen 26a kann insbesondere in einer Ausnahme angeordnet werden, welche beispielsweise sacklochartig ist. Zumindest der pilzförmige Lagerzapfen 26b kann mittels einer Blattfeder 29 der V-förmigen Kerbe 28 gehalten werde. Die Blattfeder 29 deckt die Kerbe 28 von oben ab. Insbesondere kann vorgesehen sein, dass die Blattfeder 29 vorgespannt ist und somit eine Federkraft auf den pilzförmigen Lagerzapfen 26b ausübt und ihn damit in der Kerbe 28 hält. Mittels dieser Lagerung des Spiegels 6 innerhalb des Trägerelements 27 kann somit auf einfache Art und Weise der Spiegel 6 positioniert und drehbar gelagert sein. Eine weitere mögliche Ausgestaltung ist, dass beide Lagerzapfen 26b als pilzförmige Lagerzapfen 26b ausgebildet werden und in einer jeweiligen V-förmigen Kerbe 28 positioniert werden können.

Fig. 5 zeigt eine weitere schematische Perspektivansicht einer Ausführungsform der erfindungsgemäßen Kopf-oben-Anzeigevorrichtung 2. Insbesondere zeigt Fig. 5 eine Art Explosionsdarstellung der Kopf-oben-Anzeigevorrichtung 2. Die Projektionseinrichtung 3 befindet sich dabei insbesondere in einem zusammengebauten Zustand. Dies bedeutet, dass der Spiegel 6 drehbar an dem Trägerelement 27 gelagert ist. Die Lagerzapfen 26b des Spiegels 6 sind in der V-förmigen Kerbe 28 positioniert, so dass der Spiegel 6 drehbar im Trägerelement 27 positioniert ist. Des Weiteren ist der Spiegel 6 über das Koppelelement 15 mit dem Verstellelement 18, insbesondere mit der Scheibe 20, gekoppelt. Das Koppelelement 15 ist dabei in der Spiralnut 21 zumindest bereichsweise gelagert. Über die motorische Antriebseinheit 19, welche insbesondere ein Schrittmotor sein kann, ist somit der Spiegel 6 um die Drehachse 11 schwenkbar. Dies bedeutet, dass bei einer Rotation der Rotationsachse R der motorischen Antriebseinheit 19, die Scheibe 20 mit der Spiralnut 21 ebenfalls in Rotation versetzt wird. Dies bewirkt eine Bewegung 17 des Koppelelements 15, welches ortsfest an dem Spiegel 6 angeordnet ist. Der entstandene Hebelarm sorgt für eine Verschwenkung des Spiegels 6 um die Drehachse 11 relativ zum Trägerelement 27. Da das Trägerelement 27 im im Kraftfahrzeug 1 montierten Zustand nicht beweglich angeordnet ist, führt die Relativbewegung des Spiegels 6 gegenüber dem Trägerelement 27 ebenfalls zu einer Relativbewegung gegenüber dem Kraftfahrzeug. Das Verstellelement 18 kann dabei insbesondere über eine Hauptplatine 30 der Kopf-oben-Anzeigevorrichtung 2 mit der Projektionseinrichtung 3 gekoppelt sein. Dabei kann vorgesehen sein, dass das Verstellelement 18 über eine Steuereinrichtung 33 gesteuert wird. Insbesondere kann damit eine Kalibrierung des Schwenkvorgangs beziehungsweise das Verschwenken des Spiegels 6 in eine abgespeicherte Position mittels der Steuereinrichtung 33 durchgeführt werden. Fig. 5 zeigt weiterhin ein Gehäuse, welches aus einem unteren Gehäuseteil 31 und einem oberen Gehäuseteil 32 ausgebildet sein kann.

Eine optionale Sensoreinrichtung 34 im Kraftfahrzeug 1 kann zum Beispiel eine Augenhöhe oder ein Augenpunkt eines Beobachters, insbesondere des Fahrers 8, ermitteln. Beispielhaft kann die Sensoreinrichtung 34 als Kamera, die an einem Dachhimmel oder an einer der Windschutzscheibe 7 angeordneten Innenspiegel des Kraftfahrzeugs 1 angeordnet sein kann, ausgestaltet sein und dazu eingerichtet sein, eine räumliche Lage eines Auges 9 des Fahrers 8 zu erfassen. Über eine drahtlose oder drahtgebundene Datenkommunikationseinrichtung kann das Sensorsignal an die Steuereinrichtung 33 übertragen werden. Die Steuereinrichtung 33 kann dann in Abhängigkeit des Sensorsignals, also in Abhängigkeit der Lage des Auges 9, das Verstellelement 18 ansteuern und somit den Spiegel 6 in eine bevorzugte Position schwenken. Zusätzlich oder alternativ kann die Steuereinrichtung 33 ein Steuersignal von einer Bedieneinrichtung empfangen, die den gewünschten Höhenversatz des Sichtbereichs um die Augenposition des Fahrers beschreibt. Hierzu kann der Fahrer 8 beispielsweise mit Hilfe der Bedieneinrichtung eines Kombiinstrumentes oder eines Infotainmentsystems eine Verstellung des Sichtbereichs eingeben. Das Schwenken des Spiegels 6 kann um die Drehachse 11 erfolgen, die vorzugsweise bei einer eingebauten Kopf-oben-Anzeigevorrichtung 2 in einem Kraftfahrzeug in Querrichtung verlaufen kann. In diesem Ausführungsbeispiel verläuft die Drehachse 11 senkrecht zu einer Bildebene. Durch die schwenkbare Lagerung des Spiegels 6 innerhalb des Gehäuses wird eine Spiegelebene für das virtuelle Bild 10 bei Änderung der Spiegelposition linear verschoben, ohne dass sich das virtuelle Bild 10 in seiner Lage auf der Projektionsfläche, insbesondere der Windschutzscheibe 7, signifikant ändert. Durch die lineare Verschiebung der Spiegelungsebene kann eine Verlagerung der Eyebox erreicht werden. Dadurch kann das virtuelle Bild 10 bezogen auf die Straße auf gleicher Höhe gehalten werden.

Durch diese Schwenkbewegung des Spiegels 6 (zwischen ± 1,8°) kann das virtuelle Bild 10 um ± 2°auf der Windschutzscheibe 7 verschoben werden, wodurch eine Anpassung der Eyebox an den Beobachter, insbesondere den Fahrer, realisiert werden kann.

## Patentansprüche

1. Kopf-oben-Anzeigevorrichtung (2) für ein Kraftfahrzeug (1) mit einem Gehäuse (31, 32), welches eine in dem Gehäuse (31, 32) angeordnete Projektionseinrichtung (3) zum Erzeugen eines virtuellen Bilds (10) auf eine außerhalb des Gehäuses (31, 32) liegende und von einem Beobachter betrachtbare Projektionsfläche aufweist, die zumindest einen um eine Drehachse (11) schwenkbar gelagerten Spiegel (6) aufweist, der in einer Umlenkposition zum Umlenken eines von einer Lichtquelle der Projektionseinrichtung (3) ausgegebenen Lichtes (4) ausgebildet ist, und mit einer Justiervorrichtung (J) die mit dem Spiegel (6) gekoppelt ist und die eine motorische Antriebseinheit (19) zum Justieren der Umlenkposition des Spiegels (6) durch Schwenken um die Drehachse (11) aufweist,
wobei die Justiervorrichtung (J) ein Verstellelement (18) aufweist, welches eine Spiralnut (21) aufweist, und die Justiervorrichtung (J) ein Koppelelement (15) aufweist, das mit der Spiralnut (21) gekoppelt ist, wobei zum Schwenken des Spiegels (6) das Koppelelement (15) relativ zur Spiralnut (21) in der Spiralnut (21) bewegbar ist,
**dadurch gekennzeichnet, dass**
der Spiegel (6) einen Rahmen mit einem Trägersteg (14) aufweist, wobei an einem unteren Rand des Trägerstegs (14), das Koppelelement (15) angeordnet ist.

2. Kopf-oben-Anzeigevorrichtung (2) nach Anspruch 1,
**dadurch gekennzeichnet, dass**
das Verstellelement (18) mit der motorischen Antriebseinheit (19) verbunden ist und das Verstellelement (18) durch die motorische Antriebseinheit (19) um eine Rotationsache (R) rotatorisch bewegbar ist.

3. Kopf-oben-Anzeigevorrichtung (2) nach einem der vorhergehenden Ansprüche,
**dadurch gekennzeichnet, dass**
das Verstellelement (18) als eine Scheibe (20) ausgebildet ist.

4. Kopf-oben-Anzeigevorrichtung (2) nach einem der vorhergehenden Ansprüche,
**dadurch gekennzeichnet, dass**
das Koppelelement (15) ortsfest an dem Spiegel (6) angeordnet ist.

5. Kopf-oben-Anzeigevorrichtung (2) nach Anspruch 1,
**dadurch gekennzeichnet, dass**
an einer ersten Seite (23) des Trägerstegs (14) eine Druckfeder (22) und/oder an einer zweiten Seite des Trägerstegs (14) eine Zugfeder (22) angeordnet ist.

6. Kopf-oben-Anzeigevorrichtung (2) nach einem der vorhergehenden Ansprüche,
**dadurch gekennzeichnet, dass**
die Spiralnut (21) zumindest einmal vollständig umlaufend, insbesondere zumindest zweimal vollständig umlaufend, insbesondere genau zweimal umlaufend ausgebildet ist.

7. Kopf-oben-Anzeigevorrichtung (2) nach einem der vorhergehenden Ansprüche,
**dadurch gekennzeichnet, dass**
die Spiralnut (21) an einem ersten Ende einen Anfangsanschlag (25) und an einem zweiten Ende einen Endanschlag (24) aufweist.

8. Kopf-oben-Anzeigevorrichtung (2) nach einem der vorhergehenden Ansprüche,
**dadurch gekennzeichnet, dass**
der Spiegel (6) an einem Trägerelement (27) der Kopf-oben-Anzeigevorrichtung (2) gelagert ist.

9. Kopf-oben-Anzeigevorrichtung (2) nach Anspruch 8,
**dadurch gekennzeichnet, dass**
das Trägerelement (27) zumindest eine, insbesondere V-förmige, Kerbe (28) zur Aufnahme eines Lagerzapfens (26a, 26b) des Spiegels (6) aufweist.

10. Kopf-oben-Anzeigevorrichtung (2) nach Anspruch 8 oder 9,
**dadurch gekennzeichnet, dass**
der Spiegel (6) zumindest einen, insbesondere pilzförmigen, Lagerzapfen (26b) zum drehbaren Lagern an dem Trägerelement (27) aufweist, insbesondere der Lagerzapfen (26b) an einem Rahmen (12, 13) des Spiegels (6) einstückig ausgebildet ist.

11. Kopf-oben-Anzeigevorrichtung (2) nach einem vorhergehenden Anspruch,
**dadurch gekennzeichnet, dass**
die Justiervorrichtung (J) derart ausgebildet ist, dass der Spiegel (6) in seiner Umlenkposition um kleiner ± 1,8° um eine Grundstellung veränderbar ist.

12. Fahrerassistenzsystem (34), welches eine Kopf-oben-Anzeigevorrichtung (2) gemäß den Ansprüchen 1 bis 11 aufweist.

13. Kraftfahrzeug (1), welches ein Fahrerassistenzsystem (34) gemäß Patentanspruch 12 aufweist.

14. Verfahren zum Justieren eines Spiegels (6) einer Kopf-oben-Anzeigevorrichtung (2) eines Kraftfahrzeuges (1), bei welchem die Kopf-oben-Anzeigevorrichtung (2) mit einem Gehäuse (31, 32), welches eine in dem Gehäuse (31, 32) angeordnete Projektionseinrichtung (3) zum Erzeugen eines virtuellen Bilds (10) auf eine außerhalb des Gehäuses (31, 32) liegende und von einem Beobachter betrachtbare Projektionsfläche aufweist, und mit zumindest einem um eine Drehachse (11) schwenkbar gelagerten Spiegel (6), der in einer Umlenkposition zum Umlenken eines von einer Lichtquelle der Projektionseinrichtung (3) ausgegebenen Lichts (4) ausgebildet ist, wobei eine Justiervorrichtung (J) der Kopf-oben-Anzeigevorrichtung (2) die mit dem Spiegel (6) gekoppelt wird und zum Justieren der Umlenkposition des Spiegels (6) das Schwenken um die Drehachse (11) durch eine motorische Antriebseinheit (19) der Justiervorrichtung (J) durchgeführt wird,
wobei ein Koppelelement (15) der Justiervorrichtung (J) mit einer in einem Verstellelement (18) der Justiervorrichtung (J) ausgebildeten Spiralnut (21) gekoppelt wird, und im gekoppelten Zustand des Koppelements (15) mit der Spiralnut (21) durch die motorische Antriebseinheit (19) eine Relativbewegung zwischen dem Koppelelement (15) und der Spiralnut (21) erzeugt wird und abhängig von dieser Relativbewegung der Spiegel (6) verschwenkt wird,
**dadurch gekennzeichnet, dass**
der Spiegel (6) mit einem Rahmen mit einem Trägersteg (14) bereitgestellt wird, wobei an einem unteren Rand des Trägerstegs (14), das Koppelelement (15) angeordnet ist.

## Claims

1. Head-up display apparatus (2) for a motor vehicle (1), having a housing (31, 32), which has a projection device (3), arranged in the housing (31, 32), for producing a virtual image (10) on a projection surface that lies outside the housing (31, 32) and is observable by an observer, and having at least one mirror (6) which is mounted so as to be pivotable about an axis of rotation (11) and is configured to deflect, in a deflection position, light (4) output by a light source of the projection device (3), and having an adjustment apparatus (J) which is coupled to the mirror (6) and has a motorized drive unit (19) for adjusting the deflection position of the mirror (6) by pivoting it about the axis of rotation (11),
wherein the adjustment apparatus (J) has a setting element (18) which has a helical groove (21), and the adjustment apparatus (J) has a coupling element (15) coupled to the helical groove (21), wherein the coupling element (15) is movable in the helical groove (21) in relation to the helical groove (21) for pivoting the mirror (6),
**characterized in that**
the mirror (6) has a frame with a support lug (14), wherein the coupling element (15) is arranged at a lower edge of the support lug (14).

2. Head-up display apparatus (2) according to Claim 1, **characterized in that**
the setting element (18) is connected to the motorized drive unit (19) and
the setting element (18) is rotationally movable by the motorized drive unit (19) about a rotation axis (R).

3. Head-up display apparatus (2) according to either of the preceding claims,
**characterized in that**
the setting element (18) is in the form of a disc (20).

4. Head-up display apparatus (2) according to any of the preceding claims,
**characterized in that**
the coupling element (15) is arranged spatially fixed at the mirror (6).

5. Head-up display apparatus (2) according to Claim 1, **characterized in that**
a compression spring (23) is arranged on a first side (23) of the support lug (14) and/or a tension spring (22) is arranged on a second side of the support lug (14).

6. Head-up display apparatus (2) according to any of the preceding claims,
**characterized in that**
the helical groove (21) runs at least once completely around the circumference, in particular runs at least twice completely around the circumference, more particularly runs exactly twice around the circumference.

7. Head-up display apparatus (2) according to any of the preceding claims,
**characterized in that**
the helical groove (21) has a start limit stop (25) at a first end and an end limit stop (24) at a second end.

8. Head-up display apparatus (2) according to any of the preceding claims,
**characterized in that**
the mirror (6) is mounted on a support element (27) of the head-up display apparatus (2).

9. Head-up display apparatus (2) according to Claim 8, **characterized in that**
the support element (27) has at least one, in particular V-shaped, notch (28) for receiving a bearing pin (26a, 26b) of the mirror (6).

10. Head-up display apparatus (2) according to Claim 8 or 9,
**characterized in that**
the mirror (6) has at least one, in particular mushroom-shaped, bearing pin (26b) for being rotatably supported on the support element (27), in particular the bearing pin (26b) is formed on a frame (12, 13) of the mirror (6) in one piece.

11. Head-up display apparatus (2) according to any preceding claim,
**characterized in that**
the adjustment apparatus (J) is configured such that the mirror (6) is variable in terms of its deflection position by less than ±1.8° around a base position.

12. Driver assistance system (34) having a head-up display apparatus (2) according to Claims 1 to 11.

13. Motor vehicle (1) having a driver assistance system (34) according to Claim 12.

14. Method for adjusting a mirror (6) of a head-up display apparatus (2) of a motor vehicle (1), in which the head-up display apparatus (2) with a housing (31, 32), which has a projection device (3), arranged in the housing (31, 32), for producing a virtual image (10) on a projection surface that lies outside the housing (31, 32) and is observable by an observer, and with at least one mirror (6) which is mounted so as to be pivotable about an axis of rotation (11) and is configured to deflect, in a deflection position, light (4) output by a light source of the projection device (3), wherein an adjustment apparatus (J) of the head-up display apparatus (2) which is coupled to the mirror (6) and pivoting about the axis of rotation (11) is carried out by a motorized drive unit (19) of the adjustment apparatus (J) for adjusting the deflection position of the mirror (6), wherein a coupling element (15) of the adjustment apparatus (J) is coupled to a helical groove (21) formed in the setting element (18) of the adjustment apparatus (J), and a relative movement between the coupling element (15) and the helical groove (21) is effected in the coupled state of the coupling element (15) and the helical groove (21) by the motorized drive unit (19) and the mirror (6) is pivoted depending on said relative movement,
**characterized in that**
the mirror (6) is provided with a frame with a support lug (14), wherein the coupling element (15) is arranged at a lower edge of the support lug (14).

## Revendications

1. Dispositif d'affichage tête haute (2) pour un véhicule automobile (1), comprenant un boîtier (31, 32) qui présente un équipement de projection (3) disposé dans le boîtier (31, 32) pour générer une image virtuelle (10) sur une surface de projection située à l'extérieur du boîtier (31, 32), pouvant être observée par un observateur et qui présente au moins un miroir (6) monté pivotant autour d'un axe de rotation (11) et qui est réalisé dans une position de déviation pour dévier la lumière (4) émise par une source de lumière de l'équipement de projection (3), et comprenant un dispositif d'ajustage (J) qui est accouplé au miroir (6) et qui présente une unité d'entraînement à moteur (19) pour ajuster la position de déviation du miroir (6) par pivotement autour de l'axe de rotation (11),
dans lequel le dispositif d'ajustage (J) présente un élément de réglage (18) qui présente une rainure spirale (21), et le dispositif d'ajustage (J) présente un élément de couplage (15) qui est accouplé à la rainure spirale (21), dans lequel, pour faire pivoter le miroir (6), l'élément de couplage (15) peut être déplacé par rapport à la rainure spirale (21) dans la rainure spirale (21),
**caractérisé en ce que** le miroir (6) présente un cadre pourvu d'une barrette de support (14), l'élément de couplage (15) étant disposé sur un bord inférieur de la barrette de support (14).

2. Dispositif d'affichage tête haute (2) selon la revendication 1, **caractérisé en ce que** l'élément de réglage (18) est relié à l'unité d'entraînement à moteur (19), et l'élément de réglage (18) peut être déplacé par l'unité d'entraînement à moteur (19) en rotation autour d'un axe de rotation (R).

3. Dispositif d'affichage tête haute (2) selon l'une quelconque des revendications précédentes, **caractérisé en ce que** l'élément de réglage (18) est réalisé sous forme de disque (20).

4. Dispositif d'affichage tête haute (2) selon l'une quelconque des revendications précédentes, **caractérisé en ce que** l'élément de couplage (15) est disposé de manière stationnaire au niveau du miroir (6).

5. Dispositif d'affichage tête haute (2) selon la revendication 1, **caractérisé en ce qu'**un ressort de compression (22) est disposé sur une première face (23) de la barrette de support (14), et/ou un ressort de traction (22) est disposé sur une deuxième face de la barrette de support (14).

6. Dispositif d'affichage tête haute (2) selon l'une quelconque des revendications précédentes, **caractérisé en ce que** la rainure spirale (21) est réalisée de manière au moins une fois complètement périphérique, en particulier au moins deux fois complètement périphérique, en particulier exactement deux fois périphérique.

7. Dispositif d'affichage tête haute (2) selon l'une quelconque des revendications précédentes, **caractérisé en ce que** la rainure spirale (21) présente à une première extrémité une butée initiale (25) et à une deuxième extrémité une butée d'extrémité (24).

8. Dispositif d'affichage tête haute (2) selon l'une quelconque des revendications précédentes, **caractérisé en ce que** le miroir (6) est monté sur un élément de support (27) du dispositif d'affichage tête haute (2).

9. Dispositif d'affichage tête haute (2) selon la revendication 8, **caractérisé en ce que** l'élément de support (27) présente au moins une encoche (28), en particulier en forme de V, pour recevoir un tourillon (26a, 26b) du miroir (6).

10. Dispositif d'affichage tête haute (2) selon la revendication 8 ou 9, **caractérisé en ce que** le miroir (6) présente au moins un tourillon (26b), en particulier en forme de champignon, pour le montage rotatif sur l'élément de support (27), en particulier **en ce que** le tourillon (26b) est réalisé d'un seul tenant sur un cadre (12, 13) du miroir (6).

11. Dispositif d'affichage tête haute (2) selon l'une quelconque des revendications précédentes, **caractérisé en ce que** le dispositif d'ajustage (J) est réalisé de telle sorte que le miroir (6) est variable dans sa position de déviation de moins de ±1,8° autour d'une position de base.

12. Système d'assistance au conducteur (34) qui présente un dispositif d'affichage tête haute (2) selon l'une quelconque des revendications 1 à 11.

13. Véhicule automobile (1) qui présente un système d'assistance au conducteur (34) selon la revendication 12.

14. Procédé d'ajustage d'un miroir (6) d'un dispositif d'affichage tête haute (2) d'un véhicule automobile (1), dans lequel le dispositif d'affichage tête haute (2) avec un boîtier (31, 32) qui présente un équipement de projection (3) disposé dans le boîtier (31, 32) pour générer une image virtuelle (10) sur une surface de projection située à l'extérieur du boîtier (31, 32) et pouvant être observée par un observateur, et avec au moins un miroir (6) monté pivotant autour d'un axe de rotation (11) et réalisé dans une position de déviation pour dévier la lumière (4) émise d'une source de lumière de l'équipement de projection (3), un dispositif d'ajustage (J) du dispositif d'affichage tête haute (2) qui est accouplé au miroir (6), et pour l'ajustage de la position de déviation du miroir (6), le pivotement autour de l'axe de rotation (11) est effectué par une unité d'entraînement à moteur (19) du dispositif d'ajustage (J),
un élément de couplage (15) du dispositif d'ajustage (J) étant accouplé à une rainure spirale (21) réalisée dans un élément de réglage (18) du dispositif d'ajustage (J), et à l'état accouplé à la rainure spirale (21) de l'élément de couplage (15), l'unité d'entraînement à moteur (19) génère un mouvement relatif entre l'élément de couplage (15) et la rainure spirale (21), et le miroir (6) est amené à pivoter en fonction de ce mouvement relatif,
**caractérisé en ce que** le miroir (6) est prévu avec un cadre pourvu d'une barrette de support (14), l'élément de couplage (15) étant disposé sur un bord inférieur de la barrette de support (14).
